# EUROPEAN PATENT APPLICATION

(11) **EP 1 499 093 A1**
(43) Date of publication of application: **19.01.2005**
(21) Application number: 03720933.5
(22) Date of filing: 18.04.2003
(51) Int. Cl.: H04M 1/02, H05K 5/02, H05K 7/14

(54) **PORTABLE TERMINAL DEVICE**

(30) Priority: 25.04.2002 JP 2002124220
(71) Applicant: MATSUSHITA ELECTRIC INDUSTRIAL CO., LTD., Kadoma-shi, Osaka 571-8501 (JP)
(72) Inventor: KAMEYAMA, Yoshiaki, Yokohama-shi, Kanagawa 223-0053 (JP); MINAMI, Kenji, Room 1E, Raporu K, 2119, Yokohama-shi, Kanagawa 223-0056 (JP); HASHIMOTO, Fumio, Yokosuka-shi, Kanagawa 238-0053 (JP)
(74) Representative: Grünecker, Kinkeldey, Stockmair & Schwanhäusser Anwaltssozietät
(86) International application number: PCT/JP2003/005002
(87) International publication number: WO 2003/092251

(57) **Abstract**

A portable terminal device in which a case body performs sliding movement has had a problem that a groove may be exposed to the exterior when the case body is opened to a full extent of sliding amount, which will deteriorate grade of the portable terminal device and sealing ability of the case body, permitting dust or the like to enter the cases.

In the portable terminal device according to the present invention in which a front side case is adapted to slide with respect to a back side case, a protruding member in a substantially T-shape in cross section is provided on the front side case, and a guide groove frame is provided on the back side case so as to enclose the protruding member, and a track along which the protruding member is adapted to move is defined in the guide groove frame. When the protruding member is positioned at both ends of the guide groove frame, the protruding member and the guide groove frame are arranged in such positional relation that an entire groove region of the guide groove frame is within an opposed range of the front side case. According to this structure, the groove will not be exposed to the exterior in either state where the case body is closed or opened by sliding, intrusion of dust or the like into the groove will be prevented, and sealing ability of the case body can be improved.

## Description

### <Technical Field>

The present invention relates to a portable terminal device, and more particularly to a portable type mobile communication device such as a mobile phone set, a personal handy phone set (PHS), an information terminal, etc. of a type that a case body has a sliding structure.

### <Background Art>

Conventionally, as the sliding structure of the case body of the portable terminal device, the following types have been known;
(1) in order to operate an operation part which is provided with a plurality of buttons or keys, the operation part can be withdrawn for use by sliding the operation part from a stored position,
(2) a cover case or a cover case provided with the operation part is arranged at a position for protecting a display part, and in order to see the display part, the cover case is allowed to slide for use, and
(3) a cover case is arranged at a position for covering the operation part for the purpose of preventing an erroneous operation, and the cover case is allowed to slide for use when the buttons or keys are operated.

However, in the sliding structure of the conventional portable terminal device as described above, the case body is usually provided with grooves and projections on both side faces of its sliding part. For this reason, on occasion that the case body conducts a sliding movement along the grooves and projections, the grooves are exposed to the exterior when the case body is opened to a full extent of sliding amount, depending on a length of the grooves or positions where the projections are mounted on the case body. This leads to a problem that grade of the product may be deteriorated since an outer appearance of the portable terminal device becomes worse, and that the case body may have bad sealing ability, permitting dust or the like to enter into the exposed grooves.

This problem will be fully described hereunder.

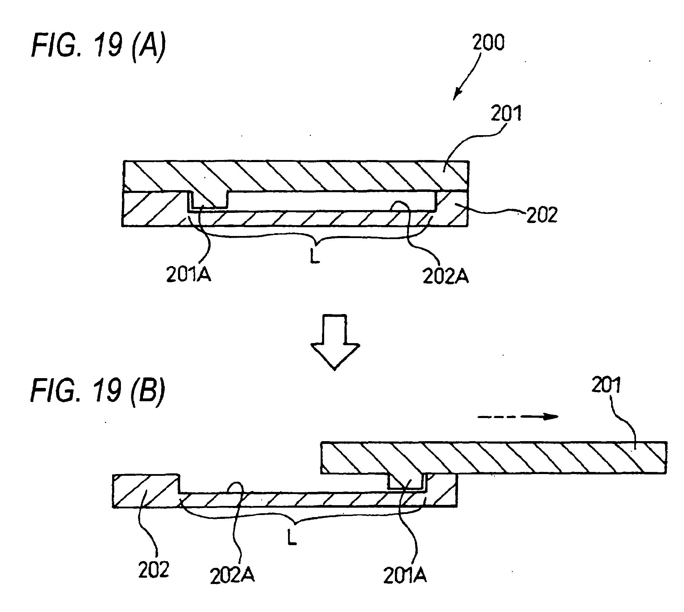

For example, Figs. 19(A) and 19(B) contain sectional views showing principle of the sliding structure of a case body 200 which is provided with a front side case 201 and a back side case 202, wherein a groove 202A of the back side case 202 is exposed to the exterior when the front side case 201 is opened by sliding.

As shown in Fig. 19(A), the groove 202A has a length L which is large in proportion to the total length of the back side case 202. In case where a projecting member 201A of the front side case 201 to be engaged with this groove is positioned close to the left in the front side case 201, a part of the groove 202A will be exposed to the exterior, when the front side case 201 is opened by sliding, as shown in Fig. 19(B).

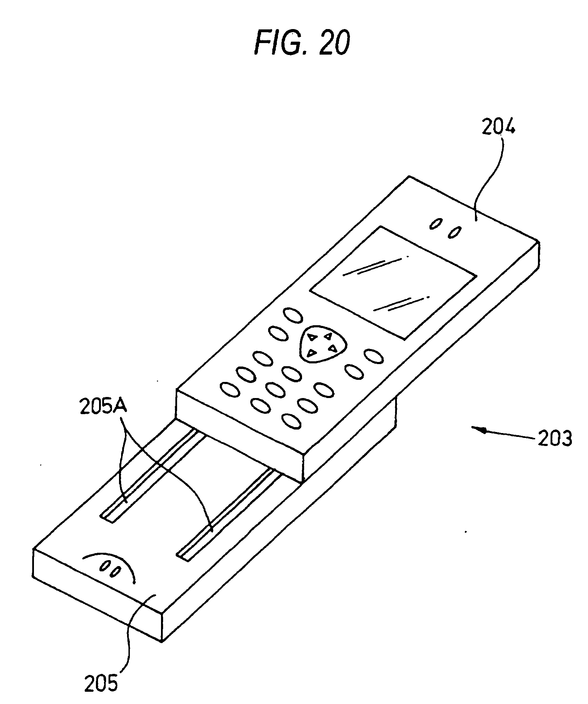

Fig. 20 shows a structure in which the sliding structure as shown in Figs. 19(A) and 19(B) have been actually employed in a case body 203 of the portable terminal device. It is found that grooves 205A of a back side case 205 are exposed to the exterior when a front case 204 is opened by sliding with respect to the back side case 205. In this manner, the grooves 205A which are exposed to the exterior are seen from the outside as shown in Fig. 20, and so, grade of the portable terminal device will be deteriorated due to bad outer appearance.

Moreover, in the conventional sliding structure, the case body has conducted the sliding movement straightly; and so, a receiver for receiving voices and a microphone for transmitting voices are located on a straight line. Accordingly, the portable terminal device having such a sliding structure has been sometimes inferior in its communication performance, as compared with a foldable type mobile phone set in which the receiver and the microphone are positioned at an angle in correspondence with a profile of a user's face between the ears and the mouth (which presents substantially an arc shape curved in a convex shape).

The present invention has been made to solve the above described problems of the prior art, and an object of the invention is to provide a portable terminal device in which sealing ability of a case body can be improved in spite of the case body having a sliding structure, and deterioration of grade due to bad outer appearance since grooves are exposed to the exterior will not be incurred, and which is excellent in communication performance of receiving and transmitting voices, and in operability.

### <Disclosure of the Invention>

A portable terminal device according to the present invention includes a front side case close to a user's face and a back side case remote from the aforesaid face, the front side case being adapted to slide with respect to the back side case, and is constructed in such a manner that the device includes a protruding member provided on a sliding face of the aforesaid front side case which is opposed to the aforesaid back side case or on a sliding face of the aforesaid back side case which is opposed to the aforesaid front side case, a guide groove frame provided on the sliding face of the aforesaid back side case which is opposed to the aforesaid front side case or on the sliding face of the aforesaid front side case which is opposed to the aforesaid back side case so as to enclose the aforesaid protruding member, and sliding means including a track which is defined in the guide groove frame and along which the aforesaid protruding member is adapted to move, wherein the aforesaid protruding member and the aforesaid guide groove frame are arranged in such positional relation that a groove part of the aforesaid guide groove frame is not exposed in its entirety to the exterior, when the aforesaid protruding member is positioned at both ends of the aforesaid guide groove frame.

According to this structure, the groove will not be exposed to the exterior in either state where the case body is closed or opened by sliding, intrusion of dust or the like into the groove will be prevented, and sealing ability of the case body can be improved.

Moreover, the portable terminal device according to the present invention is constructed in such a manner that the device includes a flexible wiring board or a wire member which connects the aforesaid front side case and the aforesaid back side case to each other in a form of electric circuit, and that the aforesaid front side case and the aforesaid back side case are respectively provided with open areas for passing the aforesaid flexible wiring board or the aforesaid wire member therethrough, wherein the aforesaid open area of the aforesaid back side case is positioned on the sliding face which is opposed to the aforesaid front side case, and is arranged in such positional relation that the open area of the aforesaid back side case is entirely within a rightly opposed region of the sliding face of the aforesaid front side case which is not exposed to the exterior, when the aforesaid protruding member is positioned at both the ends of the aforesaid guide groove frame, and at the same time, the aforesaid open area of the aforesaid front side case is positioned on the sliding face which is opposed to the aforesaid back side case, and is arranged in such positional relation that the aforesaid open area of the aforesaid front side case is entirely within a rightly opposed region of the sliding face of the aforesaid back side case which is not exposed to the exterior, when the aforesaid protruding member is positioned at both the ends of the aforesaid guide groove frame.

According to this structure, in the portable terminal device in which the front side case and the back side case are connected to each other in a form of electric circuit by means of the flexible wiring board or the wire member, the groove and the open areas will not be exposed to the exterior in either state where the cases are closed or opened by sliding, intrusion of dust or the like into the groove will be prevented, and sealing ability of the case body can be improved.

Further, the portable terminal device according to the present invention is constructed in such a manner that the aforesaid protruding member provided on the aforesaid front side case or the aforesaid back side case is in a substantially T-shape in cross section, and provided with a connector for connecting the aforesaid front side case with the aforesaid back side case in a form of electric circuit, on a contact part between the aforesaid protruding member and the aforesaid front side case or the aforesaid back side case.

According to this structure, because the front side case and the back side case can be electrically connected only by the connector, the wire member such as the flexible wiring board will not be exposed to the exterior of the case body, and as the results, abrasion and bending damage of the wire member due to unnecessary contact with the exterior can be avoided.

Still further, the portable terminal device according to the present invention includes a front side case close to a user's face and a back side case remote from the aforesaid face, the front side case being adapted to slide with respect to the back side case, and is constructed in such a manner that the device includes a protruding member in a substantially T-shape in cross section provided on a sliding face of the aforesaid front side case which is opposed to the aforesaid back side case or on a sliding face of the aforesaid back side case which is opposed to the aforesaid front side case, and a guide groove frame provided on the sliding face of the aforesaid back side case which is opposed to the aforesaid front side case or on the sliding face of the front side case which is opposed to the back side case so as to enclose the aforesaid protruding member, and sliding means including a track which is defined in the guide groove frame and along which the aforesaid protruding member is adapted to move, wherein a convex part or a concave part formed on an inner face of the aforesaid guide groove frame is engaged with a concave part or a convex part formed on the aforesaid protruding member when the aforesaid protruding member is positioned at both ends of the aforesaid guide groove frame, thereby to fix and retain the aforesaid front side case and the aforesaid back side case in a closed state or in a state opened by sliding, at both ends of the track of the aforesaid guide groove frame.

According to this structure, the cases can be retained in respective states where the case body is closed and opened by sliding, and a person who conducts the opening and closing operations can recognize the state where the case body is opened or closed, as feeling of a click when the concave part and convex part are engaged.

Still further, the portable terminal device according to the present invention is constructed in such a manner that the track of the aforesaid guide groove frame is provided with a plurality of positions in which the aforesaid convex part or concave part formed on the inner face of the aforesaid guide groove frame is engaged with the aforesaid concave part or convex part formed on the aforesaid protruding member, thereby to fix and retain the aforesaid front side case and the aforesaid back side case, and further provided with detecting means for detecting when the aforesaid front side case and the aforesaid back side case have been fixed and retained at the respective positions, wherein functional modes which have been previously determined individually with respect to the aforesaid positions of fixing and retaining are adapted to be set according to the detection.

According to this structure, the positions of fixing and retaining the case body accompanying the sliding motion can be made multi-steps. Provided that the fixing and retaining positions have been set in correspondence with the functional modes which are desired to be employed, the portable terminal device can be utilized in a determined functional mode according to the purpose, by simple operation of sliding the case body to the positions.

Still further, the portable terminal device according to the present invention includes a front side case close to a user's face and a back side case remote from the aforesaid face, the front side case being adapted to slide with respect to the back side case, and is constructed in such a manner that the device includes a protruding member in a substantially T-shape in cross section provided on one of the cases, a guide groove frame provided on the other case so as to enclose the protruding member, and sliding means including a track which is defined in the guide groove frame and along which the protruding member is adapted to move, wherein a sliding face of the aforesaid front side case which is opposed to the aforesaid back side case is in a shape of arc or arch projecting toward the aforesaid back side case so that the aforesaid track is apart from the user's face when viewed from the side face.

According to this structure, when the case body has been opened by sliding, the surface of the portable terminal device which has been opened will be in a shape of arc or arch, and in case where the portable terminal device is employed as a mobile phone set, the surface of the case body will fit a profile of the face at the time of telephone conversation.

Still further, the portable terminal device according to the present invention is constructed in such a manner that the sliding face of the aforesaid front side case which is opposed to the aforesaid back side case is in a complex shape by combining a shape of arc or arch projecting toward the aforesaid back side case in such a manner that the aforesaid track is apart from the user's face, and a straight line, when viewed from the side face.

According to this structure, when the case body has been opened by sliding, the surface of the portable terminal device which has been opened will be generally in a shape of arch, and in case where the portable terminal device is employed as a mobile phone set, the surface of the case body will fit the profile of the face at the time of telephone conversation.

Still further, the portable terminal device according to the present invention is constructed in such a manner that the front side case is provided with a receiver, and the back side case is provided with a microphone.

According to this structure, in case where the portable terminal device is put to use as a mobile phone set capable of voice communication, the receiver and the microphone will come close to the ear and the mouth respectively, thereby enhancing communication performance in receiving and transmitting voices.

Still further, the portable terminal device according to the present invention is constructed in such a manner that the front side case is provided with a receiver, a display part, and main operating keys including a navigation key, and the back side case is provided with a microphone and general input keys including ten keys.

According to this structure, it is possible to conduct data correspondence such as electronic mail and so on, looking at the display part, even while the case body is closed by sliding. In order to conduct key input in earnest, the operation part can be withdrawn for use by sliding.

Still further, the portable terminal device according to the present invention is constructed in such a manner that the microphone provided on the back side case is arranged at such a position that the front side case may not cover the microphone, even in a state where the case body is closed by sliding.

According to this structure, the voice correspondence can be made while the case body is closed, without opening the case body by conducting the sliding motion especially at the time of receiving a call, thus enhancing usefulness of the mobile phone set.

### <Brief Description of the Drawings>

Fig. 1 is an exploded perspective view showing a structure of a front side case and a back side case in a first embodiment of the present invention,
Fig. 2 is a sectional view of a sliding structure in the first embodiment of the present invention showing a state where a case body is closed,
Fig. 3 is a sectional view of the sliding structure in the first embodiment of the present invention showing a state where the case body is opened by sliding,
Fig. 4 is a perspective view of a sliding unit including a guide groove frame and a protruding member in the first embodiment of the present invention,
Fig. 5 is a perspective view showing a state where the sliding unit in the first embodiment of the present invention is mounted on the back side case,
Fig. 6 is a perspective view showing a structure of fixing the protruding member in the first embodiment of the present invention to the front side case by means of a stopper,
Fig. 7 is a perspective view showing a structure of fixing the protruding member in a second embodiment of the present invention to the front side case by means of a screw,
Fig. 8 is a sectional view showing open areas, a flexible wiring board and a wire member in a state where the case body is closed, in a third embodiment of the present invention,
Fig. 9 is a sectional view showing the open areas, the flexible wiring board and the wire member in a state where the case body is opened by sliding in the third embodiment of the present invention,
Fig. 10 is a perspective view showing a structure in which the protruding member and the case body are connected by means of a connector in a fourth embodiment of the present invention,
Fig. 11 is a perspective view showing relation between convex parts formed in the guide groove frame and concave parts formed in the protruding member in a fifth embodiment of the present invention,
Fig. 12 is a perspective view showing the convex parts in a form of spring provided in the guide groove frame in the fifth embodiment of the present invention,
Fig. 13 is a perspective view showing a plurality of the convex parts formed in the guide groove frame, and detecting switches provided in the convex parts in a sixth embodiment of the present invention,
Fig. 14 is a block circuit diagram of a mobile phone set in the sixth embodiment of the present invention,
Fig. 15 is a schematic sectional view of the sliding structure showing a state where the case body is closed in a seventh embodiment of the present invention,
Fig. 16 is a schematic sectional view of the sliding structure showing a state in which the case body is opened by sliding in the seventh embodiment of the present invention,
Fig. 17 is a perspective view of a mobile phone set in a state where the case body is closed in an eighth embodiment of the present invention,
Fig. 18 is a perspective view of the mobile phone set in a state where the case body is opened by sliding in the eighth embodiment of the present invention,
Figs. 19(A) and 19(B) are principle views showing drawbacks of a conventional sliding structure of such a type that grooves are exposed to the exterior when a case body is opened by sliding, wherein (A) shows a state where the case body is closed and (B) shows a state where the case body is opened, and
Fig. 20 is a perspective view showing a state where the grooves are exposed to the exterior when the case body is opened by sliding, in a mobile phone set employing the conventional sliding structure.

In the drawings, a reference numeral 1 refers to a front side case, 11 to an upper case (of the front side case), 12 to a lower case (of the front side case), 13 to a screw, 2 to a back side case, 21 to an upper case (of the back side case), 22 to a lower case (of the back side case), 3 to a protruding member, 31A to a concave part (provided in the protruding member), 33 to a stopper, 4 to a guide groove frame, 42 to a groove exposed to the exterior, 43 to a convex part (provided on an inner face of the guide groove frame), 44 to a convex part (in a form of spring provided on the inner face of the guide groove frame) , 5 to sliding means, 50 to a sliding unit, 51 to a detecting switch (sensor), 6 to a flexible wiring board or a wire member, 6A to an open area of the front side case (for passing the flexible wiring board or the wire member), 6B to an open area of the back side case (for passing the flexible wiring board or the wire member), 61 to a connector, 110A to main operating keys, 110B to general input keys such as ten keys, 120 to a display part, 160 to an antenna, 180 to a receiver, 190 to a microphone, X to a sliding region, Y to an opposed region, and Z to a rightly opposed region.

### <Best Mode for Carrying Out the Invention>

Several embodiments of the present invention will be described hereunder, referring to the attached drawings.

### [First Embodiment]

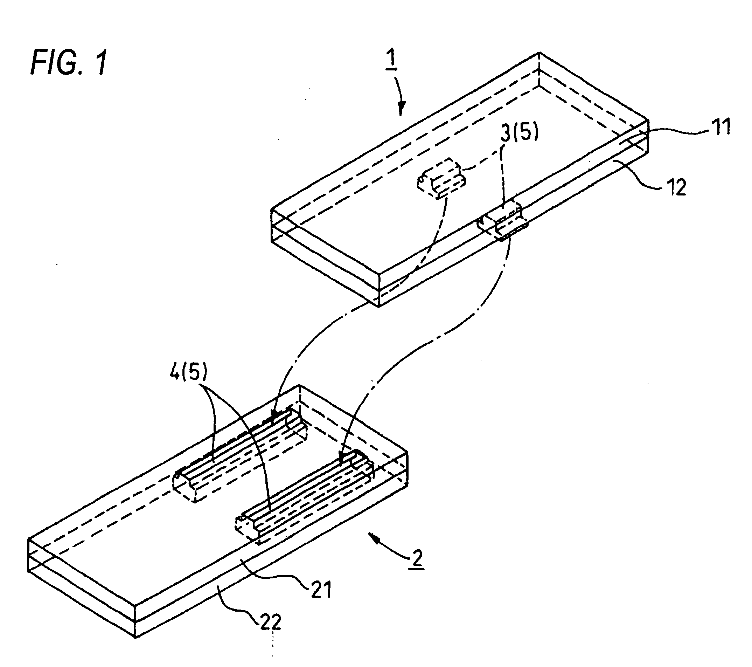

Fig. 1 shows a case body of a mobile phone set to which the portable terminal device according to the first embodiment of this invention has been applied. This case body includes a front side case 1, a back side case 2, and protruding members 3 and guide groove frames 4 which constitute sliding means 5, and is so constructed that the front side case 1 can move by sliding with respect to the back side case 2. In this embodiment, the front side case 1 is adapted to be arranged in a backward side of the mobile phone set, and the back side case 2 is adapted to be arranged in a forward side of the mobile phone set when the front side case 1 has moved by sliding with respect to the back side case 2.

The front side case 1 includes an upper case 11 and a lower case 12 bonded to each other. As described above, in order that the front side case 1 may move by sliding with respect to the back side case 2, the front side case 1 is provided with the protruding members 3 having a substantially inverted T-shape in cross section on a sliding face of the lower case 12 which is opposed to the back side case 2.

On the other hand, the back side case 2 also includes an upper case 21 and a lower case 22 bonded to each other. As described above, in order that the front side case 1 may move by sliding with respect to the back side case 2, the back side case 2 is provided with the guide groove frames 4 having a substantially C-shape in cross section so as to enclose the protruding members 3, on a sliding face of the upper case 21 which is opposed to the front side case 1. Inside these guide groove frames 4, tracks along which the protruding members 3 can move by sliding are respectively defined.

Then, the operation of the case body of the mobile phone set according to the first embodiment of this invention will be described.

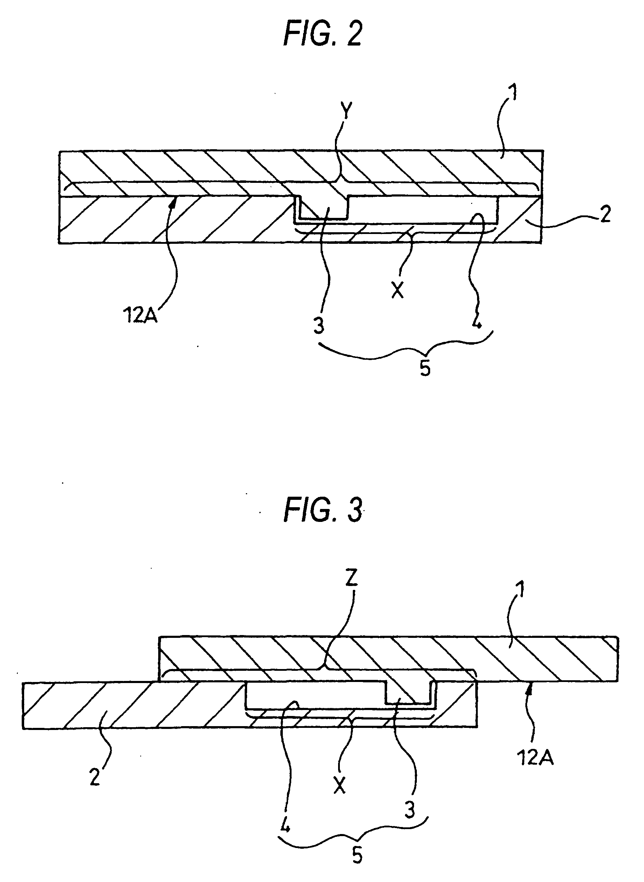

Fig. 2 is a sectional view of the case body in the sliding structure showing a state where the case body is closed. As shown in Fig. 2, the protruding member 3 is positioned at an (left) end inside the guide groove frame 4 in the state where the case body is closed. On this occasion, a region X (hereinafter referred to as "a sliding region") in which the guide groove frame 4 is formed is entirely within a region Y (hereinafter referred to as "an opposed region") which is opposed to an inner face (a lower face 12A of the lower case 12) of the front side case 1 (X < Y).

Then, Fig. 3 is a sectional view of the case body in the sliding structure showing a state where the case body is opened by sliding. As shown in Fig. 3, the protruding member 3 is positioned at an (right) end inside the guide groove frame 4 in the state where the case body is opened by sliding. On this occasion, the region X in which the guide groove frame 4 is formed is entirely within a region Z (hereinafter referred to as "a rightly opposed region") which is directly opposed and faced to the inner face (the lower face 12A of the lower case 12) of the front side case 1 (X < Z).

It is desirable that the guide groove frame 4 is arranged close to an either end (one side) of left and right ends of the back side case 2, and the protruding member 3 is formed substantially at a middle of the front side case 1 in a sliding direction, so as not to expose the guide groove frame 4 to the exterior. It is also desirable that a sliding amount is generally less than a half of the total length of the back side case 2.

Therefore, according to this first embodiment, the guide groove frame 4 will not be exposed to the exterior in either state where the case body is closed or opened by sliding, and the grade as the mobile phone set will be enhanced. Moreover, because the guide groove frame 4 is not exposed, intrusion of dust or the like into the guide groove frame 4 can be prevented, and sealing ability of the case body will be enhanced.

Then, the structure of the protruding member 3 and the guide groove 4 will be described.

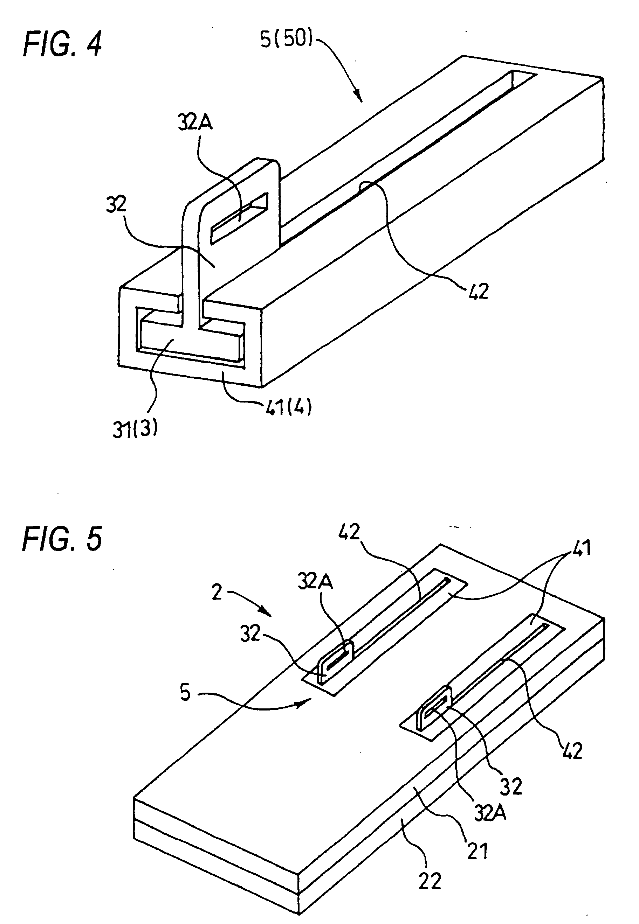

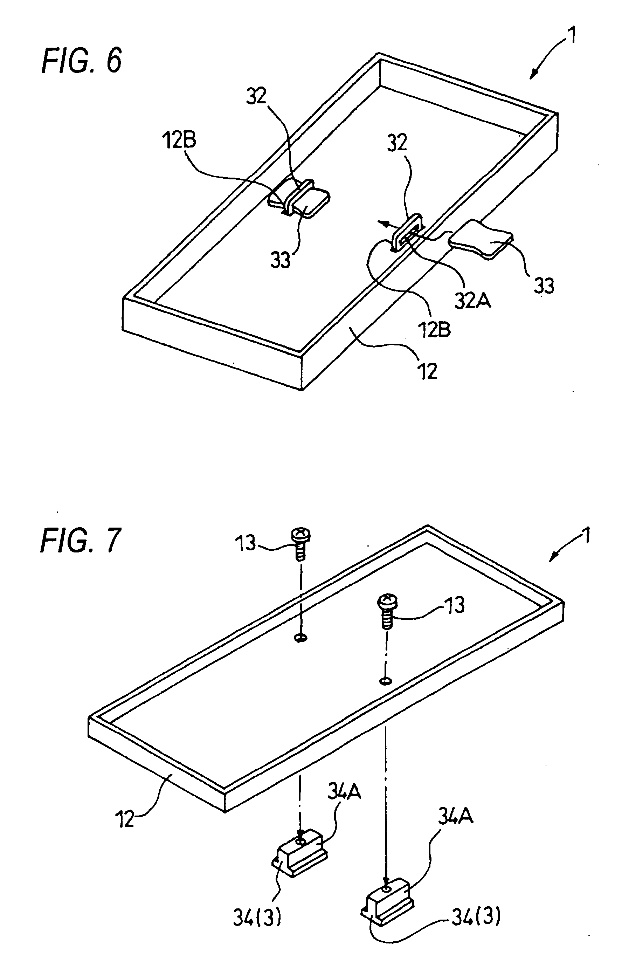

Fig. 4 is a perspective view of a sliding unit 50 of the sliding means 5 including the guide groove frame 4 and the protruding member 3, Fig. 5 is a perspective view showing a state where the sliding units 50 are mounted on the back side case 2, and Fig. 6 is a perspective view showing a structure of fixing the protruding members 3 to the front side case 1 (the lower case 12).

The sliding unit 50 in this embodiment includes the protruding member 3 and the guide groove frame 4 as shown in Fig. 4, and is so constructed that the protruding member 3 which has been set in the guide groove frame 4 in advance is integrally fixed to the back side case 2.

The protruding member 3 has a sliding member 31 having a substantially inverted T-shape in cross section, as shown in Fig. 4, and a projected portion 32 which is projected from a center of one face of this sliding member 31 is provided with a hole 32A.

On the other hand, the guide groove frame 4 has a groove-like member 41 having a substantially C-shape in cross section, as shown in Fig. 4, and the sliding member 31 is slidably contained inside this groove-like member 41. Further, this guide groove frame 4 is provided with a groove 42 which is formed in an elongated shape in a longitudinal direction, and the projected portion 32 of the sliding member 31 is projected from this groove 42.

Fixation of this sliding unit 50 can be performed by screw fitting (not shown) a part of the guide groove frame 4 to the back side case 2, or by other means. In this case, the protruding member 3 and the guide groove frame 4 are preferably made of metal, considering abrasion resistance and operational life after the repeated sliding operations of the protruding member 3 and the guide groove frame 4.

The sliding member 31 as the protruding member 3 is fixed to the front side case 1. For this purpose, the projected portion 32 which is projected from the sliding member 31 and slidably contained in the groove-like member 41, as shown in Figs. 4 and 5, is inserted into the front side case 1 through a fitting hole 12B which is formed in the lower case 12, as shown in Fig. 6. A tip end of this projected portion 32 which has been inserted into the front side case 1 is retained by inserting a stopper 33 into the hole 32A thereby to fix the protruding member 3 to the front side case 1. It is to be noted that the stopper 33 is desirably formed of appropriately hard resin or metal. According to the above described structure, it is possible to provide a product which is excellent in increasing the abrasion resistance and the operational life, with respect to the repeated sliding operations of the front side case 1.

### [Second Embodiment]

Then, the second embodiment of this invention will be described. In this embodiment, the same parts as in the first embodiment will be denoted with the same reference numerals and overlapped descriptions will be avoided.

Fig. 7 shows an essential part of the case body of the mobile phone set to which the portable terminal device according to the second embodiment of this invention has been applied. In the mobile phone set in this embodiment, the protruding member 3 is fixed to the front side case 1 by fitting means which is different from the first embodiment.

In this second embodiment too, a sliding member 34 constituting the protruding member 3 is slidably contained inside the back side case by means of a groove-like member of the guide groove frame which is not shown in the drawing. A tip end face of a projected portion 34A which is projected from this sliding member 34 is fixed to the front side case 1 (the lower case 12) by means of a screw 13.

According to the above described structure, the protruding member 3 can be mounted to the front side case 1 with a simple structure. In case of this structure, it is advantageous that the sliding structure can be easily formed if only a simple groove is provided in the back side case 2, without forming the slide unit 50 as shown in Figs. 4 and 5.

### [Third Embodiment]

Then, the third embodiment of this invention will be described. In this embodiment, the same parts as in the first embodiment will be denoted with the same reference numerals and overlapped descriptions will be avoided.

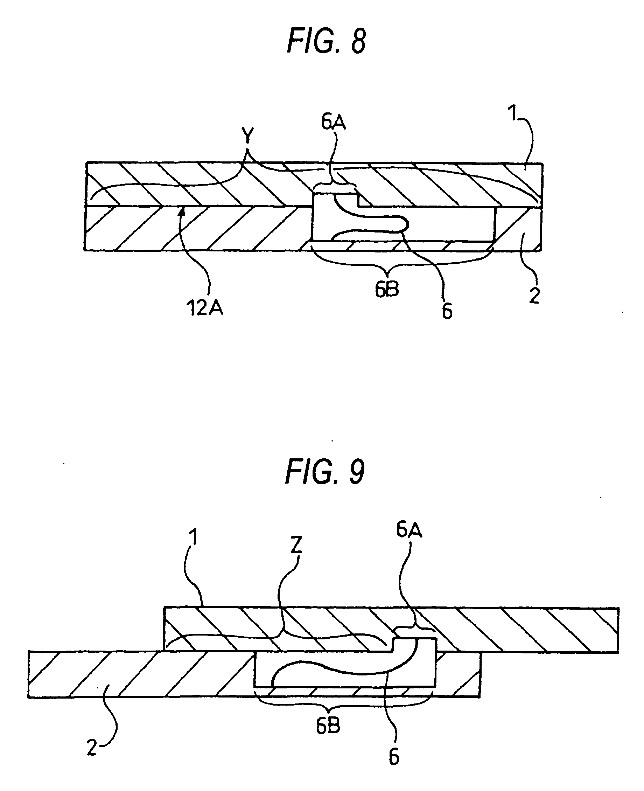

Fig. 8 shows an essential part of the case body of the mobile phone set to which the portable terminal device according to the third embodiment of this invention has been applied. In this embodiment, the front side case 1 and the back side case 2 are connected in a form of electric circuit by connecting means, for example, a flexible wiring board or a wire member 6.

The front side case 1 is formed with an open area 6A for passing the flexible wiring board or the wire member 6, on its inner face (the sliding face) (the lower face 12A of the lower case 12) opposed to the back side case 2. The back side case 2 is also provided with an open area 6B for passing the flexible wiring board or the wire member 6, on the sliding face opposed to the front side case 1. The flexible wiring board or the wire member 6 coming out of the open area 6A of the front side case 1 enters into the open area 6B of the back side case 2, and connected in a form of electric circuit.

Then, the operation will be described. Fig. 8 is a sectional view of the case body showing the open areas 6A, 6B and the flexible wiring board or the wire member 6 in the state where the case body is closed, and Fig. 9 is a sectional view of the case body showing the open areas 6A, 6B and the flexible wiring board or the wire member 6 in the state where the case body is opened by sliding.

In Figs. 8 and 9, the flexible wiring board or the wire member 6 is connected in a curved state. On this occasion, the open areas 6A and 6B are in such a positional relation that they are rightly opposed to each other.

Then, in the state where the case body is opened by sliding, the flexible wiring board or the wire member 6 is in such a position as shown in Fig. 9, and reliably connected in a stabilized manner without being caught in a gap between the sliding faces of the front side case 1 and the back side case 2 which are opposed to each other, and without being tightened with an excessive tension. Specifically, even when the case body has been slid to open to the maximum, the open areas 6A, 6B are within a rightly opposed region Z on the sliding face of the counterpart case to which they are respectively opposed.

It is to be noted that the open areas 6A, 6B will not be exposed to the exterior because of the relative positions of the open areas 6A, 6B with respect to the case body, for the same reason as the relative positions of the protruding member 3 and the guide groove frame 4 which have been described before.

Therefore, according to the above described structure of the case body in which the front side case 1 and the back side case 2 are connected in a form of electric circuit by means of the flexible wiring board or the wire member 6, the guide groove frame 4, and the open areas 6A, 6B will not be exposed to the exterior in either of the states where the case body is closed or opened by sliding. Thus, it would be advantageous that intrusion of dust or the like into the guide groove frame 4 and the open areas 6A, 6B will be prevented, and sealing ability of the case body can be enhanced.

### [Fourth Embodiment]

Then, the fourth embodiment of this invention will be described. In this embodiment, the same parts as in the first embodiment will be denoted with the same reference numerals and overlapped descriptions will be avoided.

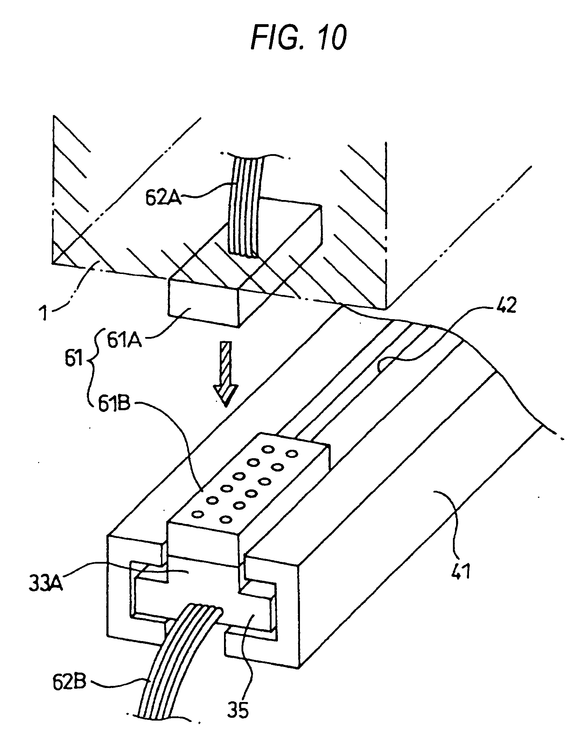

Fig. 10 shows an essential part of the case body of the mobile phone set to which the portable terminal device according to the fourth embodiment of this invention has been applied. In this embodiment, the front side case 1 and the back side case 2 are connected to each other by connecting means, specifically a connector 61 which is provided on a protruding member 35 of the sliding means 5, and at the same time, a projected portion 35A of the protruding member 35 is integrally fixed to the front side case 1.

The connector 61 includes a male type connector 61A and a female type connector 61B which is adapted to be integrally engaged with the male type connector 61A. The male type connector 61A is connected to various electronic components inside the front side case 1 by way of wiring (the flexible wiring board or the wire member) 62A which has been withdrawn by a required length. On the other hand, the female type connector 61B is connected to various electronic components inside the back side case 2 in a form of electric circuit by means of wiring (the flexible wiring board or the wire member) 62B which has been withdrawn by a required length from the protruding member 35 by way of wiring (not shown) through the projected portion 35A of the protruding member 35. It is to be noted that this wiring 62B is assured to have a sufficient extra length so that it can move along with the sliding movement of the protruding member 35.

According to the above described structure, the front side case 1 and the back side case 2 can be connected to each other in a form of electric circuit by way of the protruding member 35, and so, it is advantageous that abrasion and bending damage of the wiring (the flexible wiring board or the wire member) 62B outside the case body can be avoided.

### [Fifth Embodiment]

Then, the fifth embodiment of this invention will be described. In this embodiment, the same parts as in the first embodiment will be denoted with the same reference numerals and overlapped descriptions will be avoided.

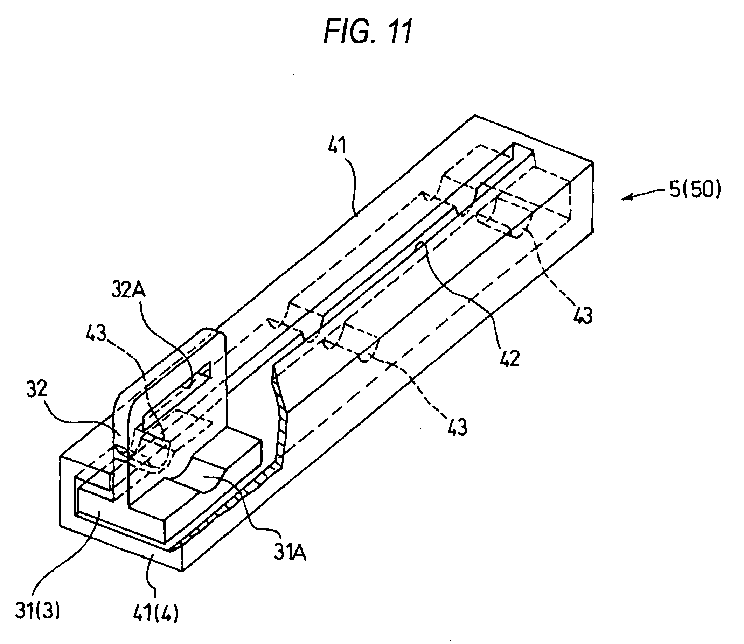

Fig. 11 shows an essential part of the sliding means 5 of the mobile phone set to which the portable terminal device according to the fifth embodiment of this invention has been applied. In this embodiment, convex parts 43 are provided at determined positions in a guide groove frame 41, and concave parts 31A are provided in the protruding member 31, as a retaining mechanism for the sliding means 5 on occasion of sliding. Instead of providing the convex parts 43, convex parts 44 formed of spring may be provided at the determined positions in the guide groove frame 41.

Then, the operation will be described.

In Fig. 11, when the protruding member 31 has moved by sliding to a forward end of the guide groove frame 41, the concave parts 31A provided in the protruding member 31 come into engagement with the convex parts 43 provided on an inner face of the guide groove frame 41, or the convex parts 44 formed of spring provided on the inner face of the guide groove frame 41. They are also engaged in the same manner, when the protruding member 31 has moved by sliding to the backward end of the guide groove frame 41.

Therefore, according to the above described structure, because the concave parts 31A are engaged with the convex parts 43 or the convex parts 44 at the respective positions, in a state where the case body is closed or opened by sliding, the sliding movement will be stopped with an occurrence of a click sound or a slight locking force. In this manner, the case body can be temporarily fixed and retained. As the results, it is advantageous that an operator who conducts the opening and closing operations can recognize the state where the case body is closed or opened, as feeling of the click sound or an appropriate stopping force when the convex and concave parts are engaged.

### [Sixth Embodiment]

Then, the sixth embodiment of this invention will be described. In this embodiment, the same parts as in the first and fifth embodiments will be denoted with the same reference numerals and overlapped descriptions will be avoided.

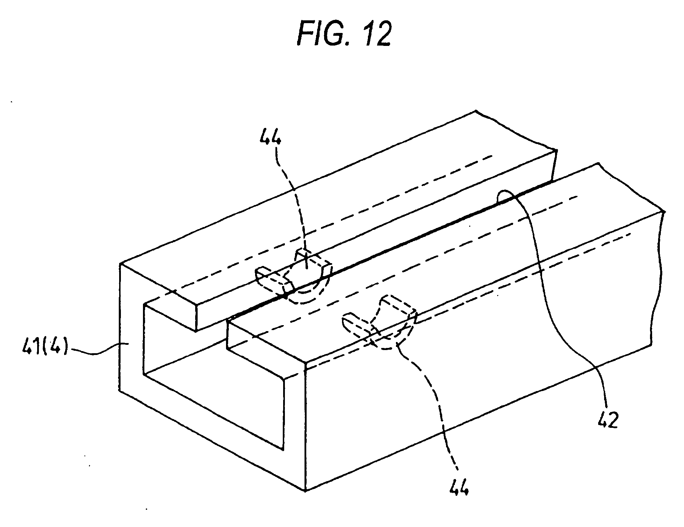

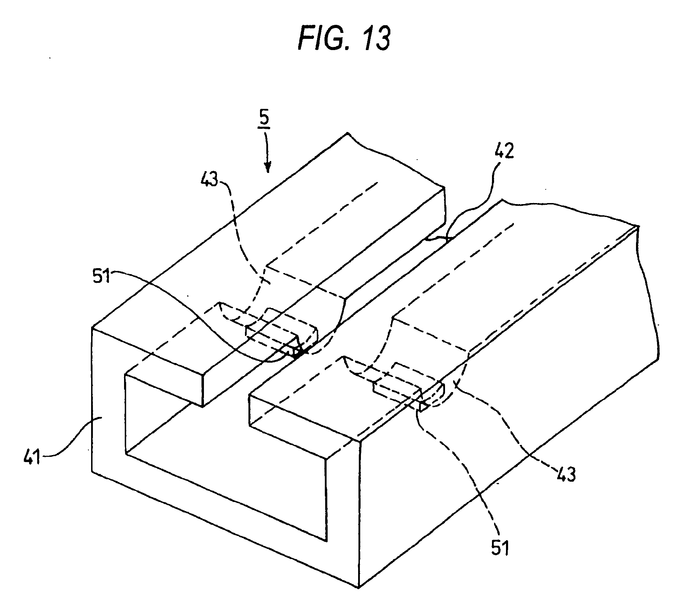

Fig. 13 shows an essential part of the sliding means 5 of the mobile phone set to which the portable terminal device according to the fifth embodiment of this invention has been applied. In the retaining mechanism for the sliding means 5 at the time of sliding utilizing the concave and convex engagement as shown in Fig. 12, a detecting switch 51 is provided in each of the convex parts 43 in the guide groove frame 41 as an additional function.

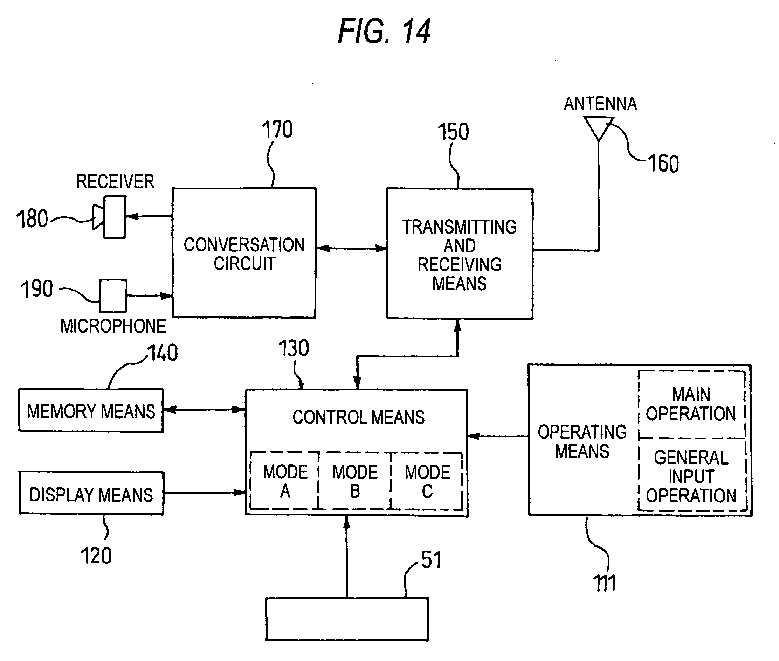

Moreover, the mobile phone set according to this embodiment is provided with operating means 110, display means 120, control means 130, memory means 140, transmitting and receiving means 150, an antenna 160, a conversation circuit 170, a receiver 180, and a microphone 190 as shown in Fig. 14, and besides, the above mentioned detecting switch 51.

The detecting switch 51 constitutes detecting means for detecting engagement and retention between the concave parts (not shown) provided in the protruding member which is not shown in Fig. 13 and the convex parts 43 provided on the inner face of the guide groove frame 41, at respective positions where the concave parts and the convex parts 43 are engaged. The detecting switch 51 is in a form of button such as a micro switch for example, and when the engagement has been effected, the button is adapted to be depressed thereby to detect the engaged and retained state between the concave parts and the convex parts 43.

Moreover, this detecting switch 51 is so constructed as to output a determined detecting signal to the control means 130, when the concave and convex engagement has been detected. In the control means 130, mode A, mode B, and mode C for example have been set in advance corresponding to the number of the concave and convex engagements, as the modes of the control means. When the concave parts and the convex parts are engaged by the sliding movement at the respective positions of the concave and convex engagement, and it has been detected that they are at these positions, the mobile phone set is adapted to be actuated in the determined functional mode.

Therefore, according to the above described structure, the slide retaining positions can be made multi-steps. By simple operation of sliding the case body to the retaining position of the functional mode which is desired to be used, the mobile phone set can be utilized in a determined functional mode according to the purpose. Although three functional modes, namely, the mode A, mode B and mode C are set in this embodiment, two or more modes can be provided in the same manner. Further, although the number of the concave and convex engagements is consistent with the number of the functional modes in this embodiment, it is possible to realize in the same manner the structure in which the number of the functional modes is smaller than the number of the concave and convex engagements.

### [Seventh Embodiment]

Then, the seventh embodiment of this invention will be described. In this embodiment, the same parts as in the first and sixth embodiments will be denoted with the same reference numerals and overlapped descriptions will be avoided.

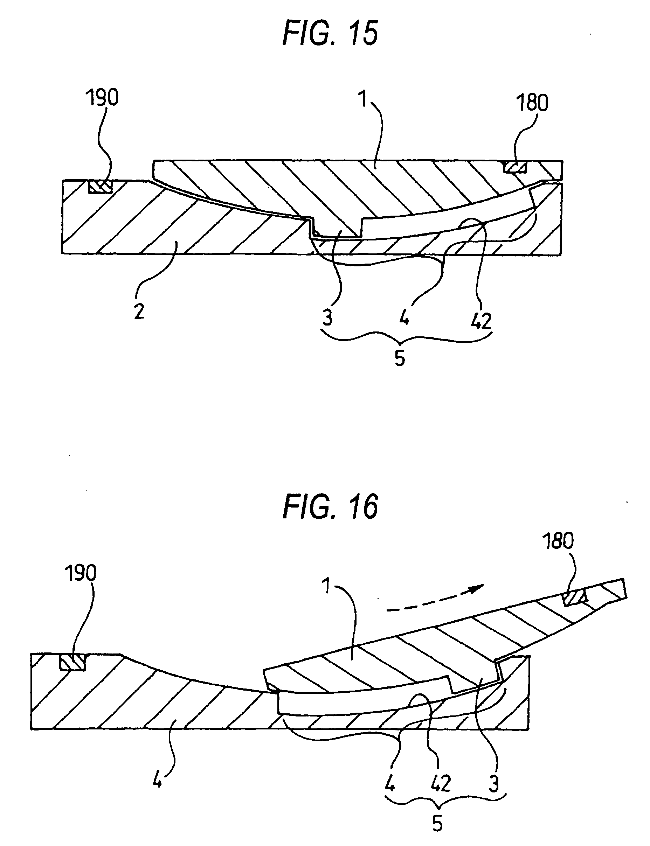

Fig. 15 is a sectional view of the case body showing a structural part of the sliding means 5 of the mobile phone set to which the portable terminal device according to the seventh embodiment of this invention has been applied. In this embodiment, a profile of the guide groove frame 4 which acts as a track for the sliding movement is in a shape of arc or arch projecting outward away from the operator's body, when the mobile phone set is seen from the side face.

Moreover, the receiver 180 is provided near the (right) end of the front side case 1, and the microphone 190 is provided near the (left) end of the back side case 2.

Then, the operation will be described.

When the case body is opened by sliding from the closed state as shown in Fig. 15, a profile of the surface of the opened mobile phone set which is opposed to the operator's face will make the shape of arc or arch.

Therefore, according to this structure, in case where the portable terminal device has been put to use as a voice communication terminal (a mobile phone set), the shape of the surface of the voice communication terminal will perfectly fit a curved profile of the face of the operator, and the receiver 180 and the microphone 190 will come to the closest positions to the ear and the mouth respectively, thereby enhancing communication performance in receiving and transmitting voices.

Although the track for the sliding movement of the case body has been described as the shape of arc or arch in this embodiment, it is possible to realize the track which presents a complex shape formed of a straight line and an arc in combination.

### [Eighth Embodiment]

Then, the eighth embodiment of this invention will be described. In this embodiment, the same parts as in the first, sixth and seventh embodiments will be denoted with the same reference numerals and overlapped descriptions will be avoided.

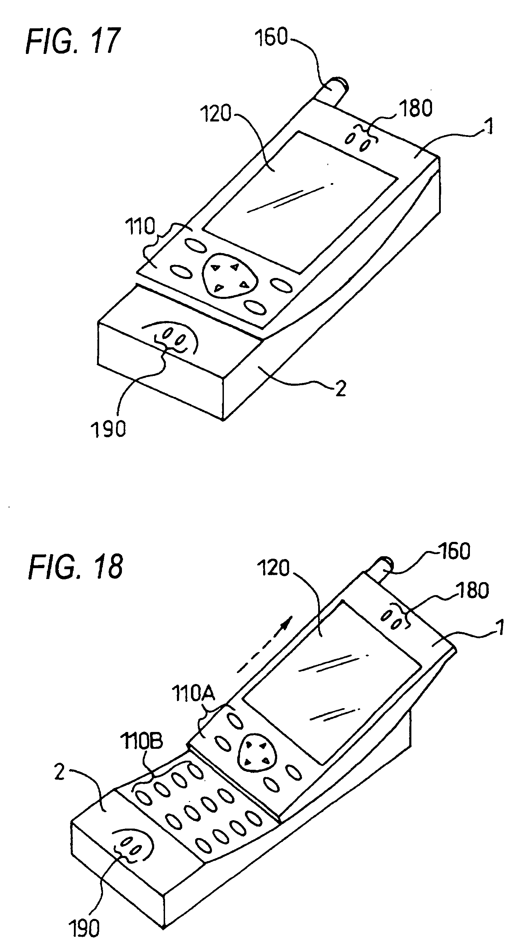

Fig. 17 shows the mobile phone set to which the portable terminal device according to the eighth embodiment of this invention has been applied. In this embodiment, the front side case 1 is provided with the receiver 180, the display part 120 and main operating keys 110A such as a navigation key, and the back side case 2 is provided with the microphone 190 and general input keys 110B such as ten keys.

As apparent from Fig. 17, the microphone 190 is provided at a position not to be covered with the front side case 1 in the state where the case body is closed. Although the antenna 160 is provided on the front side case 1, it may be provided on the back side case 2 or may be in a form of incorporated antenna (not shown).

According to the above described structure, it is possible to conduct correspondence of electronic mail and other necessary operations looking at the display part 120, even while the case body is closed. Because the main operating keys 110A will not take a large area on the front side case 1, the display part 120 can be made sufficiently large and easily looked, thus enabling the portable terminal device to be favorably utilized.

In addition, it would be advantageous that the voice communication can be made in this state, without opening the case body by conducting the sliding motion especially at the time of suddenly receiving a call, thus enhancing usefulness of the mobile phone set.

Further, as shown in Fig. 18, in order to conduct the key input operation not only with the main operating keys 110A but in earnest, input operation by means of the general input keys 110B such as the ten keys will become advantageously possible by withdrawing the operation part by sliding.

Although in the above described embodiments, such a structure that the front side case 1 is provided with the protruding member 3 and the back side case 2 is provided with the guide groove frame 4 has been described, it is also possible to realize in the same manner the structure that the back side case 2 is provided with the protruding member 3 and the front side case 1 is provided with the guide groove frame 4. Moreover, although such a structure that the two guide groove frames and the two protruding members are provided on one case body has been described, it is also possible to realize in the same manner the structure in which one each or a plurality of the guide groove frames and the protruding members are provided on one case body.

Further, in the above described embodiments, the mobile phone set is used by sliding the front side case 1 in a backward direction and the back side case 2 in a forward direction with respect to the user, the mobile phone set may be in such a structure that it is used by sliding the front side case 1 in a forward direction and the back side case 2 in a backward direction with respect to the user.

Although the present invention has been fully described referring to the specified embodiments, it would be apparent to those skilled in the art that various modifications and amendments can be added without deviating from the sprit and scope of the present invention.

This application is based on Japanese Patent Application No. 2002-124220 filed on April 25, 2002, the contents of which are herein incorporated by reference.

### <Industrial Applicability>

As described herein above, the portable terminal device according to the present invention includes a front side case close to a user's face and a back side case remote from the face, the front side case being adapted to slide with respect to the back side case, and is constructed in such a manner that the device includes a protruding member provided on a sliding face of the front side case which is opposed to the back side case or on a sliding face of the back side case which is opposed to the front side case, a guide groove frame provided on the sliding face of the back side case which is opposed to the front side case or on the sliding face of the front side case which is opposed to the back side case so as to enclose the protruding member, and sliding means including a track which is defined in the guide groove frame and along which the protruding member is adapted to move, wherein the protruding member and the guide groove frame are arranged in such positional relation that a groove part of the guide groove frame is not exposed in its entirety to the exterior, when the protruding member is positioned at both ends of the aforesaid guide groove frame.

Accordingly, the groove will not be exposed to the exterior in either state where the cases are closed or opened by sliding, the grade as the portable terminal device will be enhanced, intrusion of dust or the like into the groove will be prevented, and sealing ability of the case body can be improved.

Moreover, the portable terminal device according to the present invention is constructed in such a manner that the protruding member provided on the case body is in a substantially T-shape in cross section, and provided with a connector for connecting the front side case with the back side case in a form of electric circuit, on a contact part between the protruding member and the case body. As the results, it would be advantageous that abrasion and bending damage of the flexible wiring board or the wire member outside the case body can be avoided.

Still further, the present invention is constructed in such a manner that the track inside the guide groove frame is provided with a plurality of positions in which the convex part or concave part formed on the inner face of the guide groove frame is engaged with the concave part or convex part formed on the protruding member, thereby to fix and retain the front side case and the back side case, and further provided with detecting means for detecting when the front side case and the back side case have been fixed and retained at the respective positions, wherein functional modes which have been previously determined individually with respect to the positions of fixing and retaining are adapted to be set according to the detection.

Accordingly, the retaining positions of the sliding motion can be made multi-steps, and it would be advantageous that the portable terminal device can be utilized in a determined functional mode according to the purpose, by simple operation of sliding the case body to the retaining position of the functional mode which is desired to be utilized.

Still further, in the present invention, the case body is in a shape of arc or arch projecting toward the aforesaid back side case away from the user's face. Moreover, it is so constructed that the front side case is provided with a receiver, and the back side case is provided with a microphone. Still further, the front side case is provided with a receiver, a display part, and main operating keys including a navigation key, and the back side case is provided with a microphone and general input keys including ten keys. Still further, the microphone provided on the back side case is arranged at such a position that the front side case may not cover the microphone, even in a state where the case body is closed by sliding.

Accordingly, in case where the portable terminal device is put to use as a terminal for voice communication, the shape of the portable terminal device will fit the profile of the face, and the receiver and the microphone will come close to the ear and the mouth respectively, thereby enhancing communication performance in receiving and transmitting voices. Moreover, it is possible to conduct correspondence of electronic mail and other necessary operations looking at the display part, even while the case body is closed. Because the main operating keys will not take a large area on the front side case, the display part can be made sufficiently large and easily looked, thus enabling the portable terminal device to be favorably utilized. In addition, it would be advantageous that the voice communication can be made in this state, without opening the case body by conducting the sliding motion especially at the time of suddenly receiving a call, thus enhancing usefulness of the mobile phone set.

Still further, according to the present invention, in order to conduct the key input operation not only by means of the main operating keys but in earnest, input operation by means of the general input keys such as the ten keys will become advantageously possible by withdrawing the operation part by sliding.

## Claims

1. A portable terminal device comprising a front side case close to a user's face and a back side case remote from said face, said front side case being adapted to slide with respect to said back side case,
**characterized in that** said device includes a protruding member provided on a sliding face of said front side case which is opposed to said back side case or on a sliding face of said back side case which is opposed to said front side case, a guide groove frame provided on the sliding face of said back side case which is opposed to said front side case or on the sliding face of said front side case which is opposed to said back side case so as to enclose said protruding member, and sliding means including a track which is defined in said guide groove frame and along which said protruding member is adapted to move,
wherein said protruding member and said guide groove frame are arranged in such positional relation that a groove part of said guide groove frame is not exposed in its entirety to the exterior, when said protruding member is positioned at both ends of said guide groove frame.

2. The portable terminal device as claimed in claim 1,
**characterized in that**: said device includes a flexible wiring board or a wire member which connects said front side case and said back side case to each other in a form of electric circuit; and
that said front side case and said back side case are respectively provided with open areas for passing said flexible wiring board or said wire member therethrough,
wherein said open area of said back side case is positioned on the sliding face which is opposed to said front side case, and is arranged in such positional relation that the open area of said back side case is entirely within a rightly opposed region of the sliding face of said front side case which is not exposed to the exterior, when said protruding member is positioned at both the ends of said guide groove frame, and
wherein at the same time, said open area of said front side case is positioned on the sliding face which is opposed to said back side case, and is arranged in such positional relation that the open area of said front side case is entirely within a rightly opposed region of the sliding face of said back side case which is not exposed to the exterior, when said protruding member is positioned at both the ends of said guide groove frame.

3. The portable terminal device as claimed in claim 1,
**characterized in that** said protruding member provided on said front side case or said back side case is in a substantially T-shape in cross section, and provided with a connector for connecting said front side case with said back side case in a form of electric circuit, on a contact part between said protruding member and said front side case or said back side case.

4. A portable terminal device comprising a front side case close to a user's face and a back side case remote from said face, said front side case being adapted to slide with respect to said back side case,
**characterized in that** said device includes a protruding member in a substantially T-shape in cross section provided on a sliding face of said front side case which is opposed to said back side case or on a sliding face of said back side case which is opposed to said front side case, and a guide groove frame provided on the sliding face of said back side case which is opposed to said front side case or on the sliding face of said front side case which is opposed to said back side case so as to enclose said protruding member, and sliding means including a track which is defined in said guide groove frame and along which said protruding member is adapted to move,
wherein a convex part or a concave part formed on an inner face of said guide groove frame is engaged with a concave part or a convex part formed on said protruding member when said protruding member is positioned at both ends of said guide groove frame, thereby to fix and retain said front side case and said back side case in a closed state or in a state opened by sliding, at both ends of the track of said guide groove frame.

5. The portable terminal device as claimed in claim 4,
**characterized in that** said track of said guide groove frame is provided with a plurality of positions in which said convex part or concave part formed on the inner face of said guide groove frame is engaged with said concave part or convex part formed on said protruding member, thereby to fix and retain said front side case and said back side case, and
further provided with detecting means for detecting when said front side case and said back side case have been fixed and retained at the respective positions,
wherein functional modes which have been previously determined individually with respect to said positions of fixing and retaining are adapted to be set according to said detection.

6. A portable terminal device comprising a front side case close to a user's face and a back side case remote from said face, said front side case being adapted to slide with respect to said back side case,
**characterized in that** said device includes a protruding member in a substantially T-shape in cross section provided on one of said cases, a guide groove frame provided on the other case so as to enclose said protruding member, and sliding means including a track which is defined in said guide groove frame and along which said protruding member is adapted to move,
wherein a sliding face of said front side case which is opposed to said back side case is in a shape of arc or arch projecting toward said back side case in such a manner that said track is apart from the user's face when viewed from the side face.

7. The portable terminal device as claimed in claim 6,
**characterized in that** the sliding face of said front side case which is opposed to said back side case is in a complex shape by combining a shape of arc or arch projecting toward said back side case in such a manner that said track is apart from the user's face and a straight line, when viewed from the side face.

8. The portable terminal device as claimed in any one of claims 1 to 7,
**characterized in that** said front side case is provided with a receiver, and said back side case is provided with a microphone.

9. The portable terminal device as claimed in any one of claims 1 to 7,
**characterized in that** said front side case is provided with a receiver, a display part, and main operating keys including a navigation key, and said back side case is provided with a microphone and general input keys including ten keys.

10. The portable terminal device as claimed in claim 8 or 9,
**characterized in that** the microphone provided on said back side case is arranged at such a position that said front side case may not cover the microphone, even in a state where the cases are closed by sliding.
